# FASCICULE DE BREVET EUROPEEN

(11) **EP 3 395 766 B1**
(45) Date de publication et mention de la délivrance du brevet: **17.11.2021**
(21) Numéro de dépôt: 18170124.4
(22) Date de dépôt: 30.04.2018
(51) Int. Cl.: C02F 1/28, C02F 3/08, B01D 24/36, C02F 101/30

(54) **PROCÉDÉ DE TRAITEMENT MIXTE PAR CLARIFICATION ET ADSORPTION SUR CAP DANS UN DÉCANTEUR À LIT DE BOUES FLUIDISÉ**
GEMISCHTES AUFBEREITUNGSVERFAHREN DURCH KLÄRUNG UND ADSORPTION DURCH PULVERAKTIVKOHLE IN EINEM ABSCHEIDER MIT WIRBELSCHICHT-SCHLAMMBETT
METHOD FOR MIXED TREATMENT BY CLARIFYING AND ADSORPTION ON A CAP IN A SETTLER WITH FLUIDISED SLUDGE BED

(30) Priorité: 28.04.2017 FR 1753768
(43) Date de publication de la demande: 31.10.2018
(73) Titulaire: SAUR, 92130 Issy-les-Moulineaux (FR)
(72) Inventeur: PEROT, Jean, 78990 Elancourt (FR); HERAUD, Rémi, 85220 Coex (FR); NERRIERE, Guillaume, 85220 La Chapelle Hermier (FR)
(74) Mandataire: Regimbeau

(56) Documents cités:
- FR-A1- 2 946 333
- FR-A1- 3 005 652
- FR-A1- 3 025 508
- US-A- 6 159 365
- US-A1- 2017 044 036
- BELLO MUSTAPHA MOHAMMED ET AL: "Applications of fluidized bed reactors in wastewater treatment - A review of the major design and operational parameters", JOURNAL OF CLEANER PRODUCTION, vol. 141, 20 septembre 2016 (2016-09-20), pages 1492-1514, XP029804421, ISSN: 0959-6526, DOI: 10.1016/J.JCLEPRO.2016.09.148

## Description

### DOMAINE DE L'INVENTION

La présente invention concerne le domaine de traitement des fluides aqueux. Plus particulièrement, la présente invention concerne un procédé de traitement d'un fluide aqueux, en particulier de l'eau, associant la clarification et l'affinage par adsorption sur charbon actif en poudre dans un décanteur à lit de boues mixtes constitué d'un mélange de charbon actif en poudre et de boues d'hydroxydes métalliques, visant à éliminer les matières en suspension, les matières organiques dissoutes et les micropolluants organiques des fluides aqueux.

La présente invention concerne également une installation de traitement de fluide aqueux, comprenant un décanteur à lit de boues fluidisé et un système de recyclage en son sein de charbon actif en poudre séparé des boues mixtes extraites, convenant à la mise en oeuvre du procédé.

### ART ANTERIEUR

Les nouvelles filières de traitement d'eau à potabiliser deviennent de plus en plus complexes, multipliant les étapes unitaires de traitement, afin d'obtenir des niveaux de réduction élevés vis-à-vis de paramètres de dépollution sensibles, tels que la matière organique et les micropolluants organiques.

Le traitement des eaux de surface a longtemps reposé sur le principe d'une simple clarification réunissant les étapes de clarification (coagulation/floculation/décantation) et filtration sur sable suivie d'une désinfection. La prise en compte des pesticides et autres micropolluants indésirables (molécules responsables de Goûts et Odeurs (G&O) par exemple) a amené le traiteur d'eau à compléter la clarification par un traitement d'affinage au charbon actif en grain (filtration sur CAG), si besoin complété par l'emploi de charbon actif en poudre (CAP) à l'étape de clarification.

L'exploitation de la clarification a aussi évolué parallèlement sur les eaux à niveau de pollution critique en Carbone Organique Total (COT) en améliorant les conditions de dosages des réactifs de coagulation à base de sels de fer et d'aluminium (pH de coagulation, rapports massiques Fe/COT ou Al/COT) et en privilégiant si besoin les sels de fer beaucoup plus performants à pH acide avec les eaux riches en substances humiques.

Ces évolutions de filière sont largement tributaires des évolutions de normes sanitaires rendues encore plus sévères ces dernières années, avec notamment en France :
- Les Trihalométhanes ou (THM) regroupant des sous-produits de chloration volatiles qui résultent principalement de l'action du chlore avec les matières organiques et les bromures contenus dans l'eau. La Limite de Qualité (LQ) est passé de 150 µg/L à 100 µg/L depuis décembre 2008 ;
- Le Carbone Organique Total (COT), paramètre de contrôle de la Matière Organique Naturelle (MON) en remplacement de l'Oxydabilité au permanganate, demande de respecter la Référence de Qualité (RQ) de 2 mg/L en relation avec la formation des THM, RQ de 5 mg/L pour l'Oxydabilité au permanganate ;
- Les bromates, paramètre pouvant être associé à des impuretés contenues dans certaines eaux de javel ou formées au cours de l'ozonation des eaux contenant des bromures avec le passage de la LQ de 25 µg/L à 10 µg/ depuis décembre 2008.

Les objectifs de qualité en COT et THM à atteindre sont intimement liés, le respect des 150 puis 100 µg/L en THM du point de mise en distribution au robinet du consommateur étant à associer à la présence de reliquat de COT dans les eaux traitées. La présence de bromates en relation à l'usage de l'ozonation (en prétraitement d'eau brute ou en amont d'un étage d'adsorption au charbon actif) a aussi participé à limiter son emploi (dosages, temps d'exposition) dans l'élimination de micropolluants récalcitrants aux traitements au charbon actif, mais aussi dans son usage dans l'élimination de précurseurs de nature organique à l'origine de la formation de THM.

Avec ces exigences sanitaires de plus en plus strictes, la filtration sur CAG a montré ses limites, notamment dans l'élimination des reliquats de COT réfractaire à la clarification et a conduit progressivement à son remplacement par les réacteurs à CAP sur les nouvelles installations. Dans le cadre des anciennes filières rénovées, les réacteurs à CAP ont été rajoutés entre les étapes de clarification et filtration. Ces nouvelles orientations apportent de nombreux avantages techniques dans le contrôle des pollutions d'origine organique, mais peuvent ne pas être retenus sur différents sites pour des raisons financières et/ou d'encombrement. En effet, cette technologie, apparue dans les années 2000 avec différents procédés, repose sur des mises en contact du fluide aqueux avec une suspension de CAP coagulé suivie d'une étape de séparation, pouvant être réalisées dans un à plusieurs ouvrages de traitement.

Pour l'ensemble de ces procédés à contact de lit de CAP coagulé et floculé et dans certains cas lesté par injection de micro-sable, la coagulation est associée uniquement à la clarification du CAP introduit dans les différents procédés afin de neutraliser les charges de l'adsorbant et permettre à l'issue le piégeage des particules de CAP au sein de flocs d'hydroxydes. Les dosages en coagulant atteignent quelques milligrammes par litre tant pour les sels de fer que d'aluminium appliqués en clarification dans le traitement des eaux. Ainsi, on ne peut donc pas attribuer un effet sensible du dosage de coagulant dans l'élimination de la fraction dissoute de la matière dissoute et mesurable à partir du Carbone Organique Dissous (COD). La réduction du COD n'est alors attribuable qu'à l'action du CAP. En effet, dans de telles quantités, le coagulant ne sert qu'à coaguler le CAP. L'usage de CAP dans l'élimination de la fraction dissoute du COT, soit le COD, n'est donc pas un objectif à cette étape de traitement en raison d'absence d'effet significatif et mesurable dans des abattements complémentaires en COD à l'étape de clarification.

Un des inconvénients de l'art antérieur réside donc dans la nécessité de séparer physiquement les traitements unitaires de clarification et d'adsorption sur CAP pour valoriser le charbon sous forme de poudre dans ses propriétés d'élimination des micropolluants et d'écrêtement de la matière organique dissoute et quantifiable à partir de la détermination du COT et COD. En conséquence, cette optimisation d'usage du CAP a pour défaut de générer des coûts d'investissement plus lourds pour l'installation et la mise en oeuvre d'un tel procédé. Un autre inconvénient de l'art antérieur est lié à l'encombrement relatif à ce type de filière et à la ligne d'eau générée entre chaque étape de traitement pouvant nécessiter des reprises intermédiaires et des localisations séparées sur les installations rénovées.

Par conséquent, il existait ainsi un besoin de mettre au point un nouveau procédé de traitement de la matière organique et des micropolluants, en associant la clarification et l'adsorption sur charbon actif en poudre tout en assurant une forte activité épuratoire de l'adsorbant dans l'élimination des matières organiques dissoutes et micropolluants en complément de la clarification. Afin de maintenir une empreinte au sol réduite et des coûts d'investissement faibles, un besoin existait également pour la mise au point d'une nouvelle installation de traitement permettant de traiter efficacement les fluides aqueux en associant la clarification et l'adsorption sur charbon actif en poudre.

De manière surprenante, la Demanderesse a découvert qu'il était possible de coupler, en une seule étape de traitement au sein d'un même ouvrage, des moyens d'élimination de la matière organique et des micropolluants qui sont normalement séparés avec d'un côté la clarification réunissant les étapes de coagulation/floculation et décantation et de l'autre côté l'adsorption sur charbon actif en poudre normalement réalisée en traitement d'affinage au sein des réacteurs à CAP.

La présente invention se propose ainsi de fournir un tel procédé et une telle installation, comprenant un traitement mixte de clarification et d'adsorption sur CAP au sein d'un décanteur à lit de boues fluidisé permettant l'élimination de la matière organique dissoute et des micropolluants organiques contenus dans un fluide aqueux.

Le procédé selon l'invention s'adresse principalement au domaine de la potabilisation des eaux en traitement direct d'eau brute ; il peut aussi s'implanter en traitement tertiaire des eaux usées.

Les documents FR2946333 et FR3025508 décrivent des procédés et des installations connus de l'art antérieur.

### RESUME DE L'INVENTION

La présente invention concerne une installation de traitement d'un fluide aqueux selon la revendication 1 et un procédé de traitement selon la revendication 3.

### DESCRIPTION DES FIGURES

La figure 1 représente un exemple d'installation selon la présente invention permettant la mise en oeuvre du procédé de la présente invention.
La figure 2 représente l'abattement (en %) d'une eau initialement polluée par le métolachlore ESA à hauteur de 570 ng/L selon deux procédés (le procédé selon l'invention et un procédé selon l'art antérieur).
La figure 3 représente l'abattement (en %) d'une eau initialement polluée par le métolachlore ESA à hauteur de 1000 ng/L selon deux procédés (le procédé selon l'invention et un procédé selon l'art antérieur).

### DEFINITIONS

L'expression « charbon actif en poudre (CAP) » telle qu'utilisée dans le cadre de la présente invention désigne du charbon actif sous forme de poudre.

L'expression « diamètre moyen » exprime la taille des particules représentant 50 % en masse du matériau.

L'expression « fluide aqueux à traiter » telle qu'utilisée dans le cadre de la présente invention désigne un fluide aqueux contenant notamment des MES, des micropolluants organiques et des matières organiques naturelles que l'on souhaite éliminer.

L'expression « fluide aqueux traité » telle qu'utilisée dans le cadre de la présente invention désigne l'état d'un fluide aqueux après mise en contact avec un lit fluidisé de boues mixtes d'hydroxydes métalliques et de CAP.

L'expression « taux de traitement » telle qu'utilisée dans la présente invention désigne la masse de CAP frais (en gramme) dosé dans le fluide aqueux à traiter ramenée au volume d'eau à traiter (en m³).

L'expression « CAP frais » désigne du charbon actif en poudre n'ayant pas été encore mis en contact avec des micropolluants organiques ou des matières organiques naturelles.

L'expression « micropolluant(s) » telle qu'utilisée dans le cadre de la présente invention désigne des micropolluants liés ou non à des activités humaines, comme les substances d'origine naturelle responsables des gouts et odeurs, les pesticides, les résidus de produits pharmaceutiques et les polluants d'origine industrielle pouvant s'adsorber sur le charbon actif. Les micropolluants peuvent notamment être choisis parmi les solvants chlorés, les alkylphénols, les substances pharmaceutiques à usage humain ou animal, les hydrocarbures aromatiques polycycliques, les fongicides, les herbicides, les insecticides, les phtalates, les halogènes organiques adsorbables, les organostanneux, les phénols et leurs combinaisons.

### DESCRIPTION DETAILLEE DE L'INVENTION

La présente invention concerne ainsi un procédé de traitement d'un fluide aqueux, en particulier de l'eau, par clarification et adsorption sur charbon actif en poudre dans un décanteur à lit de boues fluidisé, à flux ascendant et alimenté de façon continue, caractérisé en ce que ledit lit de boues fluidisé est un lit fluidisé de boues mixtes d'hydroxydes métalliques et de charbon actif en poudre dans lequel la concentration en boues mixtes au sein du lit est d'au moins 1 g/L, ledit charbon actif en poudre représentant au moins 33% en poids des boues mixtes et ledit charbon actif en poudre ayant un diamètre moyen inférieur à 30 µm, et dans lequel la proportion en charbon actif en poudre au sein du lit est maintenue par recyclage d'au moins une fraction du charbon actif en poudre séparé des boues mixtes que l'on extrait du décanteur, avantageusement au moyen d'au moins un hydrocyclone.

Le procédé selon la présente invention est particulièrement efficace dans l'abattement de la turbidité, des matières en suspensions ainsi que dans l'élimination des matières organiques dissoutes et de micropolluants des fluides aqueux. En effet, l'association de l'adsorption sur CAP à la clarification a pour objectif fondamental de compléter l'élimination des matières organiques dissoutes réfractaires au traitement de coagulation/floculation et d'assurer l'élimination de micropolluants organiques indésirables.

L'invention concerne le traitement de fluide aqueux, avantageusement de l'eau. L'invention s'applique plus précisément aux eaux de surface, eaux souterraines, eaux usées urbaines ou industrielles. Dans le cas des eaux de surface et des eaux souterraines, ce sont typiquement des eaux à potabiliser nécessitant un traitement par adsorption au CAP en complément d'une clarification afin d'éliminer les matières organiques dissoutes et les micropolluants organiques. Avantageusement, le procédé selon la présente invention est utilisé en tant que traitement direct d'eau brute dans le domaine des eaux à potabiliser et est utilisé en tant que traitement tertiaire dans le domaine des eaux usées urbaines ou industrielles.

Selon un mode de réalisation avantageux, l'introduction du fluide aqueux à traiter se fait en partie basse du décanteur, typiquement via un système d'admission du fluide, avantageusement constitué d'un distributeur se présentant sous la forme d'une pluralité de rampes de dispersion percées d'orifices dirigés vers le fond dudit décanteur. Le fluide aqueux traité est récupéré en partie haute du décanteur, avantageusement par surverse au moyen de plusieurs goulottes ou tuyaux perforés.

De manière avantageuse, l'introduction du fluide aqueux à traiter dans le décanteur se fait à un débit constant. Avantageusement, la vitesse ascensionnelle du fluide aqueux dans le décanteur est comprise entre 2 m³/m².h et 6 m³/m².h.

Au moins un réactif de coagulation, tel qu'un sel métallique, typiquement à base d'aluminium ou de fer, ainsi que du charbon actif en poudre frais sont injectés, avantageusement successivement, dans le fluide aqueux à traiter en amont de son introduction dans le décanteur.

Selon l'invention, l'injection du charbon actif en poudre est réalisée après l'injection d'au moins un réactif de coagulation dans le fluide aqueux à traiter. Le réactif de coagulation permet d'éliminer une fraction de la matière organique dissoute (MOD), puis l'injection de CAP permet d'éliminer la fraction de la MOD réfractaire à la coagulation.

L'élimination de la MOD par coagulation, conduisant à l'insolubilisation et la formation de particules colloïdes, est variable suivant l'origine des eaux, la constitution de la MOD et les protocoles de coagulation (pH de coagulation, nature du coagulant, dosage). Avantageusement, il peut être compris entre 50 % et 80 % du Carbone Organique Dissous (COD). La matière organique éliminée se retrouve sous forme insoluble et piégée au sein des hydroxydes métalliques formés après coagulation et floculation. Le procédé selon la présente invention complète l'élimination des matières organiques grâce au lit de boues mixtes constitué d'une forte concentration en CAP à même d'éliminer tout ou partie de la fraction réfractaire en MOD par adsorption, quantifiable avec le COD. L'injection décalée de coagulant et de CAP frais permet de séparer physiquement les fractions de matières organiques dissoutes éliminables par coagulation au sel métallique à celle éliminable par adsorption sur charbon actif, au niveau du lit de boues mixtes dans le cadre de la présente invention.

Le fluide aqueux à traiter arrive donc coagulé dans le décanteur. Avantageusement, la dose de coagulant est adaptée à la quantité de MOD et MES du fluide aqueux à traiter. Le pH de coagulation peut être ajusté grâce à l'injection de bases ou d'acides minéraux. Typiquement, l'injection de bases ou d'acides minéraux est réalisée avant ou en même temps que l'injection de réactifs de coagulation. De manière avantageuse, le réactif de coagulation est choisi parmi les réactifs de coagulation à base de fer, d'aluminium et leurs mélanges, tels que le chlorure ferrique, le sulfate ferrique, le sulfate d'aluminium et le polychlorure d'aluminium.

De manière avantageuse, les taux de traitements en coagulant sont ajustés en fonction des teneurs en Carbone Organique Total (COT) ou Dissous (COD). Typiquement, lorsque les coagulants sont des coagulants à base d'aluminium ou de fer, leurs doses sont respectivement comprises entre 0,8 et 1,2 g Al/g de COT et 2 et 4,0 g Fe/g de COT.

De manière avantageuse, le procédé selon l'invention permet ainsi de traiter des eaux brutes pour lesquelles les pollutions en COD atteignent la dizaine de milligrammes par litre et où la MOD réfractaire à la coagulation peut être comprise entre 20 et 50 % sur le paramètre COD.

Le procédé selon l'invention permet également de traiter des eaux brutes pour lesquelles il est nécessaire d'éliminer des micropolluants organiques en complément des matières organiques naturelles.

Selon l'invention, le réactif de coagulation est injecté dans le fluide aqueux à traiter au sein d'un mélangeur statique ou dynamique. Le dosage du réactif de coagulation est assujetti aux constituants particulaires et aux types de matière organique dissoute du fluide aqueux susceptibles d'être insolubilisés par coagulation. Le mélangeur permet d'obtenir une coagulation maitrisée qui influence l'agglomération des colloïdes et le piégeage du CAP qui suit au sein du lit de boues mixtes du décanteur.

Selon un mode de réalisation particulier, un réactif de floculation d'origine minérale ou organique peut être injecté dans la canalisation d'alimentation du fluide aqueux à traiter préalablement coagulé. L'emploi de réactifs de floculation permet d'améliorer la floculation des particules colloïdales lors du contact entre le fluide aqueux à traiter et le lit de boues fluidisé. Des réactifs de floculation peuvent être injectés pour répondre à des exigences de qualité importantes en termes de turbidité et de MES de fluide aqueux traité. Ils sont alors injectés typiquement en solution diluée dans la canalisation d'alimentation de fluide aqueux à traiter, avantageusement préalablement coagulé. Avantageusement, les réactifs de floculation sont des polymères, notamment des polymères à base d'acrylamide.

Ainsi, la technologie mise en oeuvre permet l'obtention d'un lit fluidisé de boues mixtes d'hydroxydes métalliques formées à l'issue des étapes de coagulation et floculation et de CAP en mélange, le CAP étant incorporé dans les hydroxydes métalliques. Le passage de fluide aqueux au travers du lit de boues mixtes expansés de façon continue assure le traitement et l'élimination des matières en suspension, de la matière organique et des micropolluants organiques adsorbables. Le système de répartition du fluide aqueux, par le jeu d'un distributeur composé d'une pluralité de rampes de dispersion percées d'orifices permet d'introduire le fluide de façon continue et d'expanser le lit de boues sans risque de tassement de ce dernier en fond d'ouvrage. On cherche ainsi à éviter le tassement du lit de boues mixtes qui conduit généralement à la création de passages préférentiels du fluide aqueux, entrainant une diminution des contacts efficaces entre le fluide à traiter qui traverse le lit de boues mixtes et les boues qui le constituent.

Le procédé selon l'invention permet donc d'assurer un traitement complet des matières organiques et des micropolluants organiques grâce à l'association en une seule étape de traitement de la clarification, caractérisée par les étapes de coagulation/floculation et décantation et de l'adsorption sur CAP et grâce :
- aux maintiens des concentrations élevées en boues mixtes d'hydroxydes et de CAP au sein du lit (au moins 1 g/L) et
- au maintien des fortes proportions de CAP en poids des boues mixtes (au moins en poids) au sein du lit par recyclage d'au moins une fraction de CAP séparée des boues mixtes, avantageusement au moyen d'au moins un hydrocyclone.

De manière avantageuse, la concentration en boues mixtes est comprise entre 1,2 et 3,0 g/L

De manière avantageuse, le charbon actif en poudre représente entre 50 et 70 % en poids des boues mixtes au sein du lit fluidisé.

De manière avantageuse, le charbon actif en poudre à un diamètre moyen inférieur à 30 µm, avantageusement inférieure à 15 µm, de manière encore plus avantageuse compris entre 5 et 15 µm.

De manière avantageuse, le charbon actif en poudre est de nature micro-mésoporeuse ou mésoporeuse. Le choix sélectif du CAP suivant les besoins d'abattement et/ou d'objectifs de qualité d'eau à atteindre dans l'élimination des MO et micropolluants permet de varier les performances intrinsèques à la suspension de CAP présente au sein du lit fluidisé. En effet, le CAP de nature micro-mésoporeuse ou mésoporeuse est mieux adapté à l'élimination de la MON (matière Organique Naturelle) que le CAP de nature microporeuse. De plus, le choix d'une granulométrie faible permet dans le cadre du procédé selon l'invention d'augmenter les performances d'adsorption de la suspension de CAP du lit de boues en augmentant proportionnellement les cinétiques d'adsorption en relation avec les temps de séjour hydraulique maintenus dans notre système au sein du lit de boues mixtes. Ces caractéristiques particulières de porosité et de tailles de particules de CAP peuvent être justifiées par l'élimination de micropolluants organiques difficilement adsorbables comme certains pesticides tels que les dérivés de chloroacétamides (herbicide) et le métaldéhyde (molluscide).

De manière avantageuse, les taux de traitement en charbon actif en poudre sont ajustés de manière à associer le pouvoir curatif du CAP frais introduit à celui de la suspension de CAP concentré au sein du lit de boues mixtes. Typiquement, dans le cadre de l'élimination des matières organiques et des micropolluants d'eaux de surface destinées à la consommation humaine, le taux de traitement est compris entre 5 et 20 mg/L, de manière avantageuse entre 10 et 20 mg/L. Dans le cadre des eaux industrielles, le taux de traitement est typiquement de plusieurs dizaines ou centaines de mg/L, ceci se justifiant d'une part par la nature et la concentration des composés à éliminer et d'autre part par l'objectif de qualité ou l'abattement à atteindre à l'issue du traitement.

De manière avantageuse, le recyclage d'au moins une fraction du charbon actif en poudre comprend :
a) une extraction d'au moins une fraction des boues mixtes d'hydroxydes métalliques et de charbon actif en poudre du décanteur,
b) au moins une séparation d'une fraction de charbon actif en poudre contenue dans les boues extraites lors de l'étape a), avantageusement réalisée au moyen d'au moins un hydrocyclone, de manière à obtenir une fraction enrichie en charbon actif en poudre séparée des boues mixtes, et
c) une réinjection de ladite fraction obtenue à l'étape b) au sein du lit fluidisé du décanteur.

Le recyclage d'au moins une fraction du CAP séparée des boues mixtes, avantageusement au moyen d'un hydrocyclone, permet donc de réinjecter dans le décanteur une fraction enrichie en CAP débarrassée d'une forte proportion d'hydroxydes métalliques afin de maintenir une forte proportion en poids de CAP dans les boues mixtes, quels que soient les productions de boues d'hydroxydes et les dosages en CAP.

De manière avantageuse, les boues sont extraites du décanteur à partir d'une zone de déversement des boues comprenant au moins une fosse à boues.

Dans le cadre de la présente invention, par « fraction enrichie en CAP », on entend désigner une fraction présentant une proportion en CAP strictement supérieure à 70% en poids, avantageusement supérieure à 80% en poids.

La ou les étapes de séparation peut/peuvent être réalisée(s) en continu ou de manière périodique.

L'étape de séparation ou les étapes de séparation est/sont typiquement réalisée(s) au moyen d'au moins un hydrocyclone. Les hydrocyclones sont des appareils qui permettent de séparer des particules par classification hydraulique centrifuge. Ils sont typiquement constitués d'une enceinte cylindro-conique dans laquelle l'alimentation tangentielle met l'eau en rotation avant sa sortie par une tubulaire axiale de surverse. Dans le cadre de la présente invention, l'hydrocyclone permet d'augmenter d'une part la fraction en CAP contenu dans les MES des boues mixtes et d'autre part favorise l'augmentation des concentrations en MES au sein du lit fluidisé

Les pressions de travail lors de la séparation sont typiquement maintenues sous les 2,76 Bar (40 PSI), notamment entre 2,07 Bar (30 PSI) et 2,76 Bar (40 PSI).

De manière avantageuse, la fraction enrichie en CAP obtenue après séparation lors de l'étape b) est réinjectée dans la zone réactionnelle (A).

La présente invention porte également sur une installation de traitement d'un fluide aqueux, en particulier de l'eau, par clarification et adsorption sur charbon actif en poudre comprenant :
- un décanteur à lit de boues fluidisé, à flux ascendant et alimenté de façon continue (1), ledit lit fluidisé étant un lit fluidisé de boues mixtes d'hydroxydes métalliques et de charbon actif en poudre, et
- un système de recyclage de charbon actif en poudre, avantageusement d'au moins une fraction du CAP séparé des boues mixtes,
ledit décanteur comprenant trois zones distinctes de fonctionnement :
- une partie basse comprenant :
- une zone réactionnelle (A) de fluide aqueux, préalablement coagulé, comprenant un système d'admission (11) du fluide aqueux à traiter avantageusement constitué d'un distributeur se présentant sous la forme d'une pluralité de rampes de dispersion percées d'orifices dirigés vers le fond dudit décanteur, ainsi que le lit fluidisé de boues mixtes,
- une zone de déversement des boues (B), comprenant au moins une fosse à boues (13) agencée à l'intérieur du décanteur,
- une partie haute (C) comprenant une zone de décantation et de reprise (12) du fluide aqueux traité, avantageusement par surverse par plusieurs goulottes ou tuyaux perforés,
la concentration en boues mixtes au sein du lit fluidisé dans le réacteur étant d'au moins 1 g/L,
ledit charbon actif en poudre représentant au moins 33% en poids des boues mixtes et ledit charbon actif en poudre ayant un diamètre moyen inférieur à 30 µm,
ledit système de recyclage comprenant avantageusement au moins un hydrocyclone.

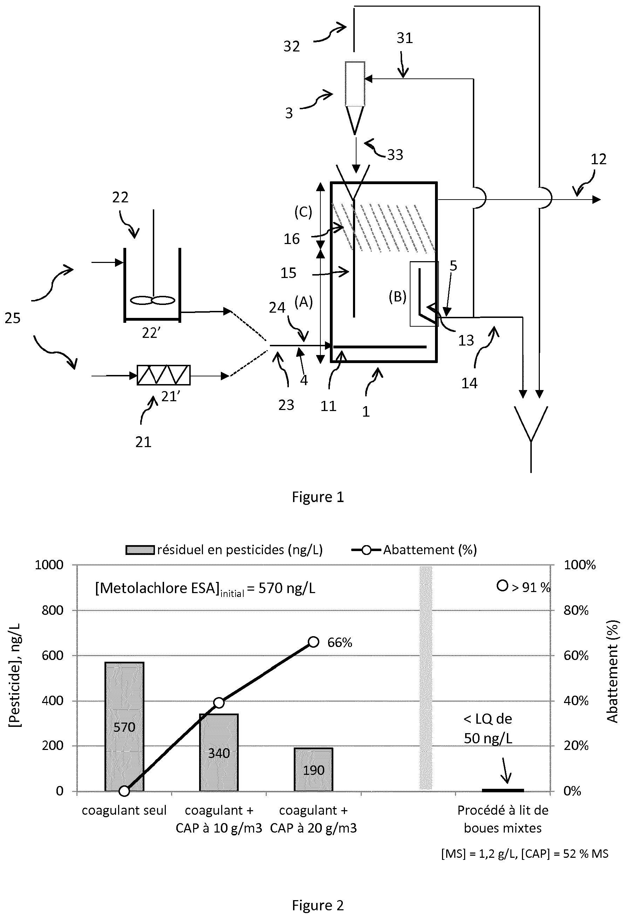

La figure 1 présente de manière schématisée un exemple d'installation selon la présente invention convenant à la mise en oeuvre du précédé selon la présente invention. L'installation de la figure 1 comprend :
- un décanteur à lit de boue fluidisé (1) comprenant les zones de fonctionnement (A), (B) et (C) et
- un système de recyclage (5, 14, 31-33 et 3).

L'installation de la figure 1 comprend plus particulièrement:
- des moyens d'injections de bases ou d'acides minéraux (25),
- un mélangeur statique (21') ou dynamique (22'),
- des moyens d'injection d'au moins un réactif de coagulation (21 et 22) dans un mélangeur statique (21') ou dynamique (22'),
- des moyens d'injection de charbon actif en poudre frais (23),
- des moyens d'injection de réactifs de floculation (24) dans la canalisation d'alimentation du fluide aqueux à traiter (4),
- un décanteur à lit de boues fluidisé (1) équipé d'un système d'admission de fluide (11),
- une fosse à boues (13),
- un circuit de soutirage des boues (5),
- des moyens d'acheminement (31) du point d'extraction vers au moins un dispositif de séparation des boues (3),
- des moyens d'évacuation des boues produites en excès (14 et 32),
- un moyen de récupération de la fraction enrichie en CAP (33),
- une canne d'injection (15),
- des plaques de décantation lamellaire (16) et
- une reprise du fluide aqueux traité (12).

Le décanteur à lit de boues fluidisé (1) est équipé d'un système d'admission (11) situé dans la zone réactionnelle (A) qui permet l'introduction du fluide aqueux à traiter dans le décanteur (1).

De manière avantageuse, le système d'admission (1) assure un brassage hydraulique. Le brassage hydraulique du lit de boues d'hydroxydes est créé par l'introduction du fluide aqueux à traiter par le système d'admission (1) constitué d'un distributeur se présentant sous la forme d'une pluralité de rampes de dispersion (2) percées d'orifices. Le brassage hydraulique évite ainsi le tassement en fond d'ouvrage et tout passage préférentiel de fluide aqueux.

De manière avantageuse, les rampes de dispersion présentent une forme de tube avec des orifices disposés en quinconce. La distribution des orifices étant reproduit à l'identique sur chaque rampe de dispersion, les jets de fluide aqueux à traiter injecté dans le décanteur via ces orifices ne peuvent pas se croiser.

De manière avantageuse, les orifices sont disposés selon au moins deux rangées s'étendant le long de deux génératrices parallèles du tube, les génératrices de deux rangées adjacentes étant distantes l'une de l'autre par un secteur angulaire du tube formant un angle compris entre 30°et 45°. La distribution de fluide aqueux de façon continue par les rampes de dispersion, assurée par les orifices, permet la répartition du fluide aqueux sur le lit de boues d'hydroxydes de manière homogène et à débit constant. Cette disposition permet ainsi l'introduction du fluide aqueux à une vitesse ascensionnelle élevée tout en gardant un lit de boues d'hydroxydes efficace en termes de traitement.

La floculation du fluide aqueux à traiter a typiquement lieu au sein du lit de boues mixtes d'hydroxydes et de CAP aggloméré au sein de flocs. La hauteur de fluidisation du lit de boues produites par coagulation/floculation est assujettie à la hauteur de soutirage des boues de la fosse à boues (13). De manière avantageuse, la hauteur du lit fluidisé de boues mixtes est délimitée par la hauteur de déversement d'au moins une partie des boues formées dans la ou les fosses à boues. La hauteur de la zone de déversement (B) est avantageusement déterminée par la hauteur de la paroi de la fosse à boues. La mise en place de la zone de déversement des boues permet grâce au déversement d'au moins une partie des boues formées dans au moins une fosse à boues de maintenir le lit fluidisé de boues mixtes stable en hauteur.

De manière avantageuse, la hauteur du lit de boues est comprise entre 2,0 et 3,0 m, typiquement entre 2,5 et 3 m afin de limiter l'encombrement en hauteur du décanteur.

De manière avantageuse, les goulottes ou tuyaux perforés sont répartis de manière uniforme sur l'ensemble de la surface de la zone de décantation en partie haute (C) du décanteur afin de permettre une reprise du fluide aqueux traité (12) après décantation en tout point de cette surface.

Selon l'invention, l'installation comprend en outre un mélangeur statique (21') ou dynamique (22') en amont dudit décanteur à lit de boues fluidisé.

L'installation comprend en outre des moyens d'injection d'au moins un réactif de coagulation (21 et 22) tel qu'un sel métallique dans ledit mélangeur statique (21') ou dynamique (22'), ainsi que des moyens d'injection de charbon actif en poudre frais (23). Le pH de coagulation pourra typiquement être ajusté à partir de l'injection de bases ou d'acides minéraux via des moyens d'injection (25).

L'installation peut comprendre en outre des moyens d'injection de réactifs de floculation (24) dans la canalisation d'alimentation du fluide aqueux à traiter (4).

De manière avantageuse, le système de recyclage comprend :
i. des moyens d'extraction d'au moins une fraction des boues mixtes d'hydroxydes métalliques et de charbon actif en poudre du décanteur,
ii. au moins un dispositif de séparation d'une fraction de CAP contenue dans les boues, avantageusement constitué par au moins un hydrocyclone,
iii. des moyens d'acheminement des boues du point d'extraction vers le dispositif de séparation des boues, et
iv. des moyens d'injection d'une fraction enrichie en CAP issue du dispositif de séparation des boues au sein du lit fluidisé du décanteur.

De manière avantageuse, dans le procédé et l'installation selon l'invention, l'extraction des boues est réalisée à partir d'au moins une fosse à boues située dans la zone de déversement des boues (C) par un circuit de soutirage (5) par voie gravitaire ou un jeu de pompes. Les boues mixtes sont alors acheminées via des moyens d'acheminement (31) du point d'extraction vers au moins un dispositif de séparation des boues (3) afin de recycler des boues à proportion plus importante en CAP, typiquement par classification hydraulique centrifuge. La fraction enrichie en CAP est alors récupérée en sous verse (33) puis réinjectée dans la zone réactionnelle (A) au moyen d'une canne d'injection (15). Typiquement, la canne d'injection (15) est immergée dans le lit de boues fluidisé.

Les boues produites en excès sont typiquement évacuées directement du point d'extraction (14) ou via les boues de surverse du dispositif de séparation (32).

Selon un mode de réalisation particulier, le recyclage d'une fraction du CAP des boues mixtes extraites au moins d'une fosse à boues est réalisé uniquement en phase de production sur le décanteur. Le fonctionnement est réglé en cadence/durée et peut être secondé par des régulations de phases d'arrêt-marche à partir de relevés de teneurs en MES provenant d'analyseurs IR disposés au sein du lit de boues du décanteur et/ou des fosses à boues. Les boues de CAP extraites par le circuit de soutirage (5) sont évacuées normalement vers l'ouvrage de séparation, avantageusement par voie gravitaire ou via un ouvrage assurant le stockage et le recyclage par un jeu de pompes.

De manière avantageuse, le décanteur peut être équipé d'au moins un module ou plaque de décantation lamellaire (16) placé dans la partie haute (C) du décanteur. La mise en place d'au moins un module ou plaque lamellaire dans le décanteur au-dessus de la zone réactionnelle (A) optimise en outre la séparation des flocs d'hydroxydes de l'eau décantée.

Selon un mode de réalisation particulier, la vitesse ascensionnelle du fluide aqueux est comprise entre 3 m³/m².h et 5 m³/m².h lorsque le décanteur n'est pas équipé de modules lamellaires en partie haute. Selon un autre mode de réalisation particulier, la vitesse ascensionnelle du fluide aqueux est comprise entre 4 m³/m².h et 6 m³/m².h lorsque le décanteur est équipé de modules lamellaires dans la zone d'eau libre précédant la reprise du fluide aqueux traité, avantageusement par plusieurs goulottes ou tuyaux perforés.

L'ouvrage de décantation à lit fluidisé est dimensionné afin de pouvoir maintenir de fortes concentrations en CAP au sein du lit fluidisé et avec des temps de contact adaptés. Les deux moyens d'action reposent sur les vitesses de passage et les hauteurs de lit de boues à privilégier.

L'installation selon la présente invention permet ainsi de réduire très fortement l'encombrement au sol en réunissant au sein d'un décanteur à lit de boues fluidisé les étapes de clarification, notamment la floculation, et d'adsorption sur CAP.

Les exemples qui suivent visent à illustrer la présente invention.

### EXEMPLES

### Exemple 1 : Comparaison des performances dans l'élimination des matières organiques dissoutes

Le procédé de traitement mixte par clarification et adsorption sur CAP réalisé en une seule étape dans un décanteur à lit fluidisé de boues mixtes selon la présente invention peut être comparé à des filières industrielles de traitement composées d'une clarification réunissant les étapes de coagulation, floculation et décantation suivies de réacteurs à CAP.

Afin de comparer les deux procédés, une unité pilote du procédé selon l'invention et d'une capacité de 14 m³/h a été disposée sur un site industriel disposant d'une filière incorporant un réacteur à CAP en traitement d'affinage succédant à une clarification à FeCl₃ à pH acide d'une eau brute à forte pollution en matières organiques dissoutes. Les bilans présentés sur les deux filières (unité pilote vs unité industrielle) ont été réalisés en parallèle sur 2 mois consécutifs.

### a. Caractéristiques principales des filières de chaque procédé

- Filière de traitement de l'unité industrielle (procédé de clarification suivi d'un affinage au charbon actif dans un réacteur à CAP) :
   - Coagulation FeCl₃ pH 5±0,2 / Floculation / Flottation / correction de pH 6,8 / Ozonation / correction de pH 7,2/ Réacteur à CAP / Filtration sur sable.
   - Caractéristiques du réacteur à CAP : Temps de séjour = 45 min, MES = 1,5 à 2,5 g/L, [CAP] = 45 à 60 % MES, séparation sur ouvrage de décantation lamellé, ajout de polymère anionique à la dose de 0,2 g/m³.
   - Caractéristiques du CAP : base = houille, porosité = micro-mésoporeux, D50% (granulométrie) = 35 µm, conditionnement = barbotine de CAP acidifié à FeCl₃, dosages en CAP neuf = 5 à 8 g/m³ (moyenne = 7 g/m³).
- Filière de traitement de l'unité pilote (procédé mixte de clarification et adsorption sur charbon actif en poudre selon l'invention):
   - Coagulation FeCl₃ pH 5±0,2 - dosage CAP / Décanteur à lit de boues mixtes / correction de pH 7/ Filtration sur sable
   - Caractéristiques de l'ouvrage de décantation à lit de boues mixtes : Vitesse au miroir = 5 m/h, Temps de séjour = 30 min, MES = 1 à 2,2 g/L (moyenne 1,4 g/L), [CAP] = 35 à 55 % MES (moyenne 47%), ouvrage non lamellé, sans ajout de polymère.
   - Caractéristiques du CAP : base = houille, porosité = micro-mésoporeux, D50% (granulométrie) = 8-15 µm, conditionnement = barbotine de CAP acidifié à FeCl₃, dosages en CAP neuf = 5 à 25 g/m³ (moyenne = 13 g/m³),
   - Caractéristiques de l'unité d'hydrocyclonage : matériel MOZLEY - modèle C124 (1 appareil) - Débit d'alimentation = 3 m³/h (pression d'alimentation proche de 3,07 bar (30 psi)) - volume de boues de purge du décanteur recyclé = 3 à 4 %
   - Caractéristiques des boues recyclées : [MS] = 15 à 50 g/L (moyenne = 23 g/L), [CAP] = 74 à 90 % MS (moyenne = 82 %).

Afin de comparer les deux procédés, les campagnes de suivis communes ont été réalisées aux mêmes doses de coagulant et pH de coagulation assignés à la clarification ; dosages en solution commerciale de chlorure ferrique compris entre 108 g/m³ et 201 g/m³ (moyenne = 162 g/m³).

### b. Comparaisons des performances obtenues dans l'élimination des matières organiques dissoutes : paramètres COT et COD - 22 campagnes de contrôles étalées sur 7 mois consécutifs

• Filière industrielle

| Point de mesure | Eau Brute | Eau clarifiée (eau décantée) | Eau filtrée sable (Ozone +réacteur à CAP + filtre) | | Abattement clarification | Abattement Ozone+ affinage au CAP + filtration sur sable | Abattement filière industrielle |
|---|---|---|---|---|---|---|---|
| | moyenne (min à max), en mg/L | | | | moyenne (min à max), en % | | |
| COT (mg/L) | 9,6 (7,6 à 11) | 2,5 (2,1 à 3) | 1,7 (1,4 à 2,2) | | 74 (70 à 78) | 33 (24 à 41) | 82 (78 à 85) |
| COD (mg/L) | 9,0 (7,5 à 9,9) | 2,4 (1,9 à 2,9) | 1,7 (1,4 à 2,2) | | 74 (70 à 77) | 26 (16 à 35) | 81 (78 à 84) |

• Filière de traitement de l'unité pilote : décanteur à lit de boues mixtes

| Point de mesure | Eau Brute | Eau Filtrée (décanteur + filtre) | | Abattement Filière Pilote |
|---|---|---|---|---|
| | moyenne (min à max), en mg/L | | | moyenne (min à max), en % |
| COT (mg/L) | 9,6 (7,6 à 11) | 1,7 (1,4 à 2,2) | | 81 (76 à 86) |
| COD (mg/L) | 9,0 (7,5 à 9,9) | 1,7 (1,3 à 2,1) | | 81 (74 à 86) |

Dans le cadre de la filière industrielle, les résultats montrent que la clarification de l'eau brute à l'aide du FeCl₃ conduit à des abattements moyens en COT et COD de 74%. L'affinage au CAP dans un réacteur de traitement qui fait suite renforce les niveaux d'abattement respectif en portant à 81-82% les performances de traitement de l'installation industrielle.

Dans le cadre de la filière développée selon la présente invention, c'est-à-dire en associant un traitement par clarification à l'adsorption sur CAP au sein d'un seul ouvrage, les résultats globaux montrent des performances identiques (aux erreurs analytiques prêts) dans la détermination du COT et COD (± 0,1 mg/L). Ainsi, le procédé de la présente invention permet de répondre aux mêmes objectifs de traitement en un seul étage de traitement associant la floculation de l'eau brute préalablement coagulée et l'adsorption sur CAP au sein d'un lit fluidisé de boues mixtes d'hydroxydes et de CAP.

Les performances d'adsorption du procédé selon la présente invention couvrent donc celles du traitement d'affinage de l'installation industrielle avec des choix de CAP et des conditions de mise en œuvre différentes.

Les coûts supérieurs en réactifs attendus sur le poste de CAP, notamment liés au coût de l'adsorbant et à sa consommation importante sont largement compensés par les économies d'investissement réalisées sur les ouvrages et équipements.

### Exemple 2 : Effet du lit de boues mixtes d'hydroxydes métalliques et de CAP dans le cadre de l'élimination de micropolluants organiques : cas du métolachlore ESA

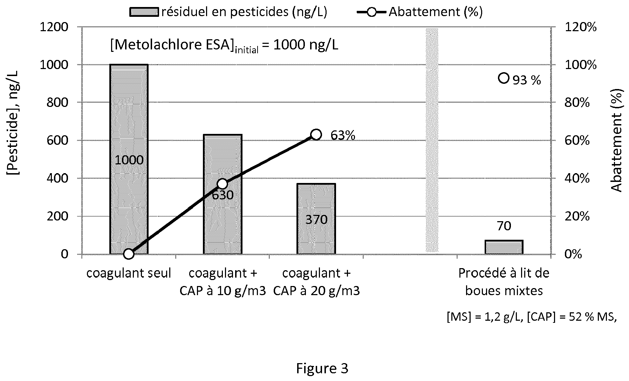

Les figures 2 et 3 illustrent les résultats obtenus après la mise en contact d'eau brute préalablement coagulée soit avec seulement du CAP neuf soit avec une suspension en CAP du lit de boues mixtes d'hydroxydes métalliques et de CAP provenant du procédé selon l'invention (boues provenant du réacteur pilote mentionné dans l'exemple 1).

La comparaison des performances du CAP neuf (doses de 10 et 20 mg/L) et du lit de boues mixtes (MS = 1,2 g/L, teneur en CAP = 52 % MS) entretenu à une dose de CAP de 20 mg/L a été réalisée avec le métolachlore ESA, sous-produit de pesticide à usage phytosanitaire appartenant à la famille des chloroacétamides.

D'après les figures 2 et 3, la mise en contact de l'eau polluée à des niveaux de dopage de 570 et 1000 ng/L avec la suspension en CAP coagulé du lit de boues mixtes et renouvelé en CAP à la dose de 20 mg/L, permet d'obtenir un abattement supérieur à 91 % dans les deux cas. En revanche, la mise en contact de l'eau polluée avec un coagulant suivie du même dosage de CAP sans contact avec le lit de boues mixtes donne des abattements proches des 63 - 66 %.

Les gains d'abattement générés par le procédé selon la présente invention sont donc ici pour ce pesticide récalcitrant de 35 % minimum. Le procédé selon l'invention permet de maintenir dans les eaux traitées (aux deux niveaux de pollution) des teneurs inférieures à 100 ng/l : < LQ de 50 ng/L (LQ = Limite de Quantification de la méthode analytique) (figure 2) et 70 ng/L (figure 3), ce qui n'est pas permis par l'emploi seul de CAP après coagulation à la dose de 20 g/m³, les teneurs en polluants étant respectivement de 190 ng/L et 370 ng/L pour des teneurs initiales de 570 et 1000 ng/l.

Ainsi, la recirculation des boues mixtes, avantageusement au moyen d'un hydrocyclone permet de maintenir des concentrations en CAP au sein du lit de boues mixtes de plusieurs centaines de milligramme par litre sur toute la hauteur du lit fluidisé. La séparation par centrifugation des boues issues des concentrateurs à boues permet de recycler au sein du lit fluidisé une partie du CAP débarrassée pour partie des hydroxydes métalliques qui va ensuite densifier le lit afin de maintenir un niveau de concentration élevée d'adsorbant en son sein.

Cette forte masse de CAP participe à l'élimination des matières organiques dissoutes et des micropolluants organiques tels que les pesticides en complétant l'action du dosage en CAP neuf.

## Revendications

1. Installation de traitement d'un fluide aqueux, en particulier de l'eau, par clarification et adsorption sur charbon actif en poudre comprenant :
- un décanteur à lit de boues fluidisé, à flux ascendant et alimenté de façon continue (1), ledit lit fluidisé étant un lit fluidisé de boues mixtes d'hydroxydes métalliques et de charbon actif en poudre,
- un mélangeur statique (21') ou dynamique (22') en amont dudit décanteur à lit de boues fluidisé (1),
- des moyens d'injection d'au moins un réactif de coagulation (21 et 22) tel qu'un sel métallique dans le mélangeur statique (21') ou dynamique (22'),
- une canalisation d'alimentation (4) acheminant le fluide aqueux sortant du mélangeur statique (21') ou dynamique (22') vers le décanteur,
- des moyens d'injection de charbon actif en poudre frais (23) dans la canalisation d'alimentation en fluide aqueux, et
- un système de recyclage de charbon actif en poudre,
ledit décanteur comprenant trois zones distinctes de fonctionnement :
- une partie basse comprenant :
- une zone réactionnelle (A) de fluide aqueux, avantageusement préalablement coagulé, comprenant un système d'admission (11) du fluide aqueux à traiter avantageusement constitué d'un distributeur se présentant sous la forme d'une pluralité de rampes de dispersion percées d'orifices dirigés vers le fond dudit décanteur, ainsi que le lit fluidisé de boues mixtes,
- une zone de déversement des boues (B), comprenant au moins une fosse à boues (13) agencée à l'intérieur du décanteur,
- une partie haute (C) comprenant une zone de décantation et de reprise (12) du fluide aqueux traité, avantageusement par surverse par plusieurs goulottes ou tuyaux perforés,
la concentration en boues mixtes au sein du lit fluidisé dans le réacteur étant d'au moins 1 g/L,
ledit charbon actif en poudre représentant au moins 33% en poids des boues mixtes et ledit charbon actif en poudre ayant un diamètre moyen inférieur à 30 µm,
ledit système de recyclage comprenant avantageusement au moins un hydrocyclone.

2. Installation de traitement selon la revendication 1, **caractérisée en ce que** ledit système de recyclage comprend :
i. des moyens d'extraction d'au moins une fraction des boues mixtes d'hydroxydes métalliques et de charbon actif en poudre du décanteur,
ii. au moins un dispositif de séparation d'une fraction de CAP contenue dans les boues, avantageusement constitué par au moins un hydrocyclone,
iii. des moyens d'acheminement des boues du point d'extraction vers le dispositif de séparation, et
iv. des moyens d'injection d'une fraction enrichie en CAP issue du dispositif de séparation au sein du lit fluidisé du décanteur.

3. Procédé de traitement d'un fluide aqueux, en particulier de l'eau, par clarification et adsorption sur charbon actif en poudre dans une installation de traitement telle que décrite à la revendication 1 ou 2 comprenant le décanteur à lit de boues fluidisé, à flux ascendant et alimenté de façon continue (1), **caractérisé en ce que** :
- au moins un réactif de coagulation et du charbon actif en poudre frais sont injectés successivement dans le fluide aqueux à traiter en amont de son introduction dans le réacteur, l'injection du réactif de coagulation dans le fluide aqueux étant réalisée au sein du mélangeur statique (21') ou dynamique (22'), l'injection de charbon actif en poudre étant réalisée après injection dudit réactif de coagulation dans le fluide aqueux à traiter, la dose du réactif de coagulation injecté permettant d'éliminer la Matière Organique Dissoute et les Matières en Suspension du fluide aqueux par coagulation ;
- la clarification et l'adsorption sur charbon actif sont couplés en une seule étape de traitement réalisée au sein dudit décanteur, et **en ce que**
- ledit lit de boues fluidisé (1) est un lit fluidisé de boues mixtes d'hydroxydes métalliques et de charbon actif en poudre dans lequel la concentration en boues mixtes au sein du lit est d'au moins 1 g/L, ledit charbon actif en poudre représentant au moins 33% en poids des boues mixtes et ledit charbon actif en poudre ayant un diamètre moyen inférieur à 30 µm, et dans lequel la proportion en charbon actif en poudre au sein du lit est maintenue par recyclage d'au moins une fraction du charbon actif en poudre séparé des boues mixtes extraites du décanteur, avantageusement au moyen d'au moins un hydrocyclone (3).

4. Procédé selon la revendication 3, **caractérisé en ce que** l'introduction du fluide aqueux à traiter se fait en partie basse du décanteur et le fluide aqueux traité est récupéré en partie haute du décanteur, avantageusement par surverse.

5. Procédé selon l'une des revendications 3 à 4, **caractérisé en ce que** la vitesse ascensionnelle du fluide aqueux dans le décanteur est comprise entre 2 m³/m².h et 6 m³/m².h.

6. Procédé selon l'une des revendications 3 à 5, **caractérisé en ce que** le charbon actif en poudre représente entre 50 et 70% en poids des boues mixtes.

7. Procédé selon l'une des revendications 3 à 6, **caractérisé en ce que** le charbon actif en poudre à un diamètre moyen inférieur à 15 µm.

8. Procédé selon l'une des revendications 3 à 7, **caractérisé en ce que** le charbon actif en poudre est de nature micro-mésoporeuse ou mésoporeuse.

9. Procédé selon l'une des revendications 3 à 8, **caractérisé en ce que** ledit recyclage d'au moins une fraction du charbon actif en poudre comprend :
a) une extraction d'au moins une fraction des boues mixtes d'hydroxydes métalliques et de charbon actif en poudre du décanteur,
b) au moins une séparation d'une fraction de charbon actif en poudre contenue dans les boues extraites lors de l'étape a), avantageusement réalisée au moyen d'au moins un hydrocyclone, de manière à obtenir une fraction enrichie en charbon actif en poudre séparée des boues mixtes, et
c) une réinjection de ladite fraction obtenue à l'étape b) au sein du lit fluidisé du décanteur.

10. Procédé selon l'une quelconque des revendications 3 à 9, dans lequel le traitement est un traitement direct d'eau brute dans le domaine des eaux à potabiliser.

11. Procédé selon la revendication 3 à 10, dans lequel le réactif de coagulation est un réactif de coagulation à base d'aluminium ou de fer et dans lequel la dose du réactif de coagulation à base d'aluminium ou de fer est respectivement comprise entre 0,8 et 1,2 g Al/ g de Carbone Organique Total et 2 et 4,0 g Fe/g de Carbone Organique Total du fluide aqueux.

## Patentansprüche

1. Anlage zur Aufbereitung einer wässrigen Flüssigkeit, im Besonderen Wasser, durch Klärung und Adsorption an pulverförmiger Aktivkohle, umfassend:
- einen kontinuierlich beschickten Wirbelbett-Absetzbehälter mit Aufwärtsströmung (1), wobei das Wirbelbett ein Wirbelbett aus Mischschlamm von Metallhydroxiden und pulverförmiger Aktivkohle ist,
- einen dem Wirbelbett-Absetzbehälter (1) vorgeschalteten statischen Mischer (21') oder dynamischen Mischer (22'),
- Mittel zum Einspritzen mindestens eines Koagulationsreagens (21 und 22), wie z. B. eines Metallsalzes in den statischen Mischer (21') oder dynamischen Mischer (22'),
- eine Zuleitung (4), die die wässrige Flüssigkeit aus dem statischen Mischer (21') oder dynamischen Mischer (22') zu dem Absetzbehälter leitet,
- Mittel zum Einspritzen von frischer pulverförmiger Aktivkohle (23) in die Zuleitung für die wässrige Flüssigkeit, und
- ein System zur Wiederverwertung von pulverförmiger Aktivkohle,
wobei der Absetzbehälter drei unterschiedliche Betriebszonen umfasst:
- einen unteren Teil umfassend:
- eine Reaktionszone (A) für wässrige Flüssigkeit, die vorteilhafterweise vorher koaguliert wurde, mit einem Einlasssystem (11) für die aufzubereitende wässrige Flüssigkeit, das vorteilhafterweise aus einem Verteiler in Form einer Vielzahl von Dispersionsrohren besteht, die mit Öffnungen versehen sind, welche zum Boden des Absetzbehälters gerichtet sind, sowie mit dem Wirbelbett aus Mischschlamm,
- eine Schlammaustragszone (B) mit mindestens einer Schlammgrube (13), die innerhalb des Absetzbehälters angeordnet ist,
- einen oberen Teil (C) mit einer Absetz- und Rückgewinnungszone (12) für die aufbereitete wässrige Flüssigkeit, vorteilhafterweise durch Überlauf durch mehrere Ablaufrinnen oder perforierte Rohre;
wobei die Mischschlammkonzentration in dem Wirbelbett des Reaktors mindestens 1 g/l beträgt,
wobei die pulverförmige Aktivkohle mindestens 33 Gew.-% des Mischschlamms beträgt, und die pulverförmige Aktivkohle einen mittleren Durchmesser von weniger als 30 µm aufweist,
wobei das System zur Wiederverwertung vorteilhafterweise mindestens einen Hydrozyklon umfasst.

2. Aufbereitungsanlage nach Anspruch 1, **dadurch gekennzeichnet, dass** das System zur Wiederverwertung umfasst:
i. Mittel zur Extraktion mindestens eines Teils des Mischschlamms aus Metallhydroxiden und pulverförmiger Aktivkohle aus dem Absetzbehälter,
ii. mindestens eine Vorrichtung zur Trennung eines in dem Schlamm enthaltenen Anteils an pulverförmiger Aktivkohle, welche vorteilhafterweise aus mindestens einem Hydrozyklon besteht,
iii. Mittel zum Transport des Schlamms von dem Ort der Extraktion zu der Trenneinrichtung, und
iv. Mittel zum Einspritzen eines mit pulverförmiger Aktivkohle angereicherten Teils, der aus der Trennvorrichtung gewonnen wurde, in das Wirbelbett des Absetzbehälters.

3. Verfahren zur Aufbereitung einer wässrigen Flüssigkeit, im Besonderen Wasser, durch Klärung und Adsorption an pulverförmiger Aktivkohle in einer Aufbereitungsanlage nach Anspruch 1 oder 2, die den kontinuierlich beschickten Wirbelbett-Absetzbehälter mit Aufwärtsströmung (1) umfasst, **dadurch gekennzeichnet, dass**
- mindestens ein Koagulationsreagens und frische pulverförmige Aktivkohle nacheinander in die aufzubereitende wässrige Flüssigkeit eingespritzt werden, bevor diese in den Reaktor eingeleitet wird, wobei das Einspritzen des Koagulationsreagens in die wässrige Flüssigkeit innerhalb des statischen Mischers (21') oder dynamischen Mischers (22') erfolgt, wobei das Einspritzen der pulverförmigen Aktivkohle nach dem Einspritzen des Koagulationsreagens in die aufzubereitende wässrige Flüssigkeit erfolgt, wobei es die Dosis des eingespritzten Koagulationsreagens ermöglicht, die gelösten organischen Stoffe und die Schwebstoffe in der wässrigen Flüssigkeit durch Koagulation zu beseitigen;
- die Klärung und Adsorption an Aktivkohle in einem einzigen Aufbereitungsschritt gekoppelt sind, der innerhalb des Absetzbehälters erfolgt, und
- das Wirbelbett (1) ein Wirbelbett aus Mischschlamm aus Metallhydroxiden und pulverförmiger Aktivkohle ist, wobei die Mischschlammkonzentration in dem Wirbelbett mindestens 1 g/l beträgt, wobei die pulverförmige Aktivkohle mindestens 33 Gew.-% des Mischschlamms beträgt und die pulverförmige Aktivkohle einen mittleren Durchmesser von weniger als 30 µm aufweist, und wobei der Anteil der pulverförmigen Aktivkohle in dem Wirbelbett durch Wiederverwertung von mindestens einem Teil der pulverförmigen Aktivkohle aufrechterhalten wird, die von dem aus dem Absetzbehälter extrahierten Mischschlamm getrennt wird, vorteilhafterweise mithilfe von mindestens einem Hydrozyklon (3).

4. Verfahren nach Anspruch 3, **dadurch gekennzeichnet, dass** die Einleitung der aufzubereitenden wässrigen Flüssigkeit in dem unteren Teil des Absetzbehälters erfolgt und die aufbereitete wässrige Flüssigkeit in dem oberen Teil des Absetzbehälters, vorteilhafterweise durch Überlauf, zurückgewonnen wird.

5. Verfahren nach einem der Ansprüche 3 bis 4, **dadurch gekennzeichnet, dass** die Aufwärtsströmungsgeschwindigkeit der wässrigen Flüssigkeit in dem Absetzbehälter zwischen 2 m³/m².h und 6 m³/m².h liegt.

6. Verfahren nach einem der Ansprüche 3 bis 5, **dadurch gekennzeichnet, dass** die pulverförmige Aktivkohle zwischen 50 und 70 Gew.-% des Mischschlamms ausmacht.

7. Verfahren nach einem der Ansprüche 3 bis 6, **dadurch gekennzeichnet, dass** die pulverförmige Aktivkohle einen mittleren Durchmesser von weniger als 15 µm aufweist.

8. Verfahren nach einem der Ansprüche 3 bis 7, **dadurch gekennzeichnet, dass** die pulverförmige Aktivkohle mikromesoporös oder mesoporös ist.

9. Verfahren nach einem der Ansprüche 3 bis 8, **dadurch gekennzeichnet, dass** die Wiederverwertung von mindestens einem Teil der pulverförmigen Aktivkohle umfasst:
a) Extraktion mindestens eines Teils des Mischschlamms aus Metallhydroxiden und pulverförmiger Aktivkohle aus dem Absetzbehälter,
b) mindestens Trennung eines Teils der pulverförmigen Aktivkohle, die in dem in Schritt a) extrahierten Schlamm enthalten ist, vorteilhafterweise durchgeführt mithilfe mindestens eines Hydrozyklons, um einen mit pulverförmiger Aktivkohle angereicherten Anteil zu erhalten, der von dem Mischschlamm getrennt wird, und
c) erneutes Einspritzen dieses in Schritt b) erhaltenen Anteils in das Wirbelbett des Absetzbehälters.

10. Verfahren nach einem der Ansprüche 3 bis 9, wobei die Aufbereitung eine direkte Aufbereitung von Rohwasser im Bereich Trinkwasser ist.

11. Verfahren nach den Ansprüchen 3 bis 10, wobei das Koagulationsreagens ein Koagulationsreagens auf Aluminium- oder Eisenbasis ist und wobei die Dosis des Koagulationsreagens auf Aluminium- oder Eisenbasis zwischen 0,8 und 1,2 g Al/g organischem Kohlenstoff insgesamt und 2 und 4,0 g Fe/g organischem Kohlenstoff insgesamt der wässrigen Flüssigkeit liegt.

## Claims

1. A plant for treating an aqueous fluid, in particular water, by clarification and adsorption on powdered activated carbon comprising:
- a continuously-fed upflow fluidized sludge bed clarifier (1), said fluidized bed being a fluidized bed of mixed sludge of metal hydroxides and powdered activated carbon,
- a static (21') or dynamic (22') mixer upstream of said fluidized sludge bed clarifier (1),
- means for injecting at least one coagulation reagent (21 and 22) such as a metal salt into the static (21') or dynamic (22') mixer,
- a supply pipe (4) conveying the aqueous fluid leaving the static (21') or dynamic (22') mixer to the decanter,
- means for injecting fresh powdered activated carbon (23) into the aqueous fluid supply pipe, and
- a powdered activated carbon recycling system, said decanter comprising three distinct operating zones:
- a lower part comprising:
- a reaction zone (A) for aqueous fluid, advantageously coagulated beforehand, comprising an inlet system (11) for the aqueous fluid to be treated, advantageously consisting of a distributor in the form of a plurality of dispersion ramps pierced with openings directed toward the bottom of said decanter, as well as the fluidized bed of mixed sludge,
- a sludge discharge zone (B), comprising at least one sludge pit (13) arranged inside the decanter,
- an upper part (C) comprising a decantation and recovery zone (12) for the treated aqueous fluid, advantageously by overflow through several spouts or perforated pipes,
the concentration of mixed sludge within the fluidized bed in the reactor being at least 1 g/L,
said powdered activated carbon representing at least 33% by weight of the mixed sludge and said powdered activated carbon having an average diameter of less than 30 µm,
said recycling system advantageously comprising at least one hydrocyclone.

2. The treatment plant as claimed in claim 1, **characterized in that** said recycling system comprises:
i. means for extracting at least one fraction of the mixed sludge of metal hydroxides and powdered activated carbon from the decanter,
ii. at least one device for separating a fraction of PAC contained in the sludge, advantageously consisting of at least one hydrocyclone,
iii.means for conveying the sludge from the extraction point to the separation device, and
iv. means for injecting a PAC-enriched fraction from the separation device into the fluidized bed of the decanter.

3. A process for treating an aqueous fluid, in particular water, by clarification and adsorption on powdered activated carbon in a treatment plant as described in claim 1 or 2 comprising the continuously-fed upflow fluidized sludge bed clarifier (1), **characterized in that**:
- at least one coagulation reagent and fresh powdered activated carbon are successively injected into the aqueous fluid to be treated upstream of its introduction into the reactor,
the injection of the coagulation reagent into the aqueous fluid being carried out within the static (21') or dynamic (22') mixer, the injection of powdered activated carbon being carried out after injection of said coagulation reagent into the aqueous fluid to be treated, the dose of coagulation reagent injected making it possible to eliminate the Dissolved Organic Matter and the Suspended Matter from the aqueous fluid by coagulation;
- the clarification and the adsorption on activated carbon are coupled in a single treatment step carried out within said decanter, and **in that**
- said fluidized sludge bed (1) is a fluidized bed of mixed sludge of metal hydroxides and powdered activated carbon wherein the concentration of mixed sludge within the bed is at least 1 g/L, said powdered activated carbon representing at least 33% by weight of the mixed sludge and said powdered activated carbon having an average diameter of less than 30 µm, and wherein the proportion of powdered activated carbon within the bed is maintained by recycling at least one fraction of the powdered activated carbon separated from the mixed sludge extracted from the decanter, advantageously by means of at least one hydrocyclone (3).

4. The process as claimed in claim 3, **characterized in that** the aqueous fluid to be treated is introduced in the lower part of the clarifier and the treated aqueous fluid is recovered in the upper part of the clarifier, advantageously by overflow.

5. The process as claimed in one of claims 3 to 4, **characterized in that** the ascending speed of the aqueous fluid in the decanter is comprised between 2 m³/m².h and 6 m³/m².h.

6. The process as claimed in one of claims 3 to 5, **characterized in that** the powdered activated carbon represents between 50 and 70% by weight of the mixed sludge.

7. The process as claimed in one of claims 3 to 6, **characterized in that** the powdered activated carbon has an average diameter of less than 15 µm.

8. The process as claimed in one of claims 3 to 7, **characterized in that** the powdered activated carbon is of a micro-mesoporous or mesoporous nature.

9. The process as claimed in one of claims 3 to 8, **characterized in that** said recycling of at least one fraction of the powdered activated carbon comprises:
a) extraction of at least one fraction of the mixed metal hydroxides and powdered activated carbon sludge from the decanter,
b) at least one separation of a fraction of powdered activated carbon contained in the sludge extracted during step a), advantageously carried out by means of at least one hydrocyclone, so as to obtain a fraction enriched in powdered activated carbon separated from the mixed sludge, and
c) reinjection of said fraction obtained in step b) into the fluidized bed of the decanter.

10. The process as claimed in any one of claims 3 to 9, wherein the treatment is a direct treatment of raw water in the field of drinking water.

11. The process as claimed in claim 3 to 10, wherein the coagulation reagent is an aluminum or iron-based coagulation reagent and wherein the dose of the aluminum or iron-based coagulation reagent is between 0.8 and 1.2 g Al/g Total Organic Carbon and 2 and 4.0 g Fe/g Total Organic Carbon of the aqueous fluid, respectively.
